# EUROPÄISCHE PATENTSCHRIFT

(11) **EP 2 496 118 B1**
(45) Veröffentlichungstag und Bekanntmachung des Hinweises auf die Patenterteilung: **23.10.2013**
(21) Anmeldenummer: 09748208.7
(22) Anmeldetag: 02.11.2009
(51) Int. Cl.: A47J 31/20

(54) **TEEBEREITER MIT VERSCHLIESSBARER AUSGIESSÖFFNUNG**
TEA-MAKER HAVING A CLOSABLE POURING SPOUT
THÉIÈRE À OUVERTURE DE DÉVERSEMENT REFERMABLE

(43) Veröffentlichungstag der Anmeldung: 12.09.2012
(73) Patentinhaber: PI-Design AG, 6234 Triengen (CH)
(72) Erfinder: BODUM, Jørgen, CH-6045 Meggen (CH)
(74) Vertreter: Detken, Andreas
(86) Internationale Anmeldenummer: PCT/CH2009/000347
(87) Internationale Veröffentlichungsnummer: WO 2010/031198

(56) Entgegenhaltungen:
- WO-A1-2009/109011
- WO-A1-2010/003258
- WO-A2-2009/149568
- GB-A- 2 401 308
- US-A1- 2007 028 779
- US-B1- 7 464 637

## Beschreibung

### TECHNISCHES GEBIET

Die vorliegende Erfindung betrifft einen Getränkebereiter mit einem nach oben offenen Gefäss und einem darin einsetzbaren Filtereinsatz. Derartige Getränkebereiter werden häufig zur Zubereitung von Tee verwendet. Sie werden daher im Folgenden vereinfachend als Teebereiter bezeichnet, obwohl sie auch zur Zubereitung anderer Getränke als Tee dienen können.

### STAND DER TECHNIK

Derartige Teebereiter sind in einer Vielzahl von Ausführungen erhältlich. Ein solcher Teebereiter wird z.B. unter der Bezeichnung BISTRO NOUVEAU 1870 von der BODUM®-Gruppe angeboten (BODUM®-Katalog 2009, Seite 47). Der Teebereiter umfasst einen zylindrischen Teekrug, in dessen obere Öffnung ein mehrteiliger Deckel lose eingesetzt ist. Der Deckel umfasst ein Deckelunterteil, das als Haltering für einen Filtereinsatz ausgebildet ist, sowie ein Deckeloberteil. In das Deckelunterteil ist ein Filtereinsatz eingesetzt. Dieser weist eine Vielzahl von Öffnungen auf, um Flüssigkeit durchzulassen und Teeblätter oder dergleichen zurückzuhalten. Zur Zubereitung von Tee werden Teeblätter in den Filtereinsatz gegeben und mit heissem Wasser aufgebrüht. Nach dem Ziehen wird der Filtereinsatz aus dem Teekrug herausgenommen. Das Deckeloberteil wird dann auf das Deckelunterteil aufgelegt und überdeckt die Einführöffnung für den Filtereinsatz, um Wärmeverluste zu verringern.

Ebenfalls sind sogenannte Kolben-Teebereiter aus dem Stand der Technik bekannt, die auch kurz als "Tea Press" bezeichnet werden. Bei derartigen Teebereitem ist es nicht nötig, den Filtereinsatz nach dem Ziehen aus dem Teekrug herauszunehmen. Ein solcher Kolben-Teebereiter ist z.B. in US 5,453,189 beschrieben. Hier ist ein Filtereinsatz unmittelbar in die obere Öffnung eines (hier bauchigen) Teekrugs eingesetzt. Der Filtereinsatz weist einen zylindrischen Seitenwandbereich auf, wobei mindestens ein oberer Teil dieses Bereichs eine Vielzahl von Öffnungen aufweist, um Flüssigkeit durchzulassen und Teeblätter oder dergleichen zurückzuhalten. Ein unterer Teil des zylindrischen Seitenwandbereichs sowie der Boden des Filtereinsatzes sind dagegen flüssigkeitsundurchlässig. In den Filtereinsatz ist dichtend ein Kolben einschiebbar, der ebenfalls weitgehend flüssigkeitsundurchlässig ist. Zur Zubereitung von Tee werden Teeblätter in den Filtereinsatz gegeben und mit heissem Wasser aufgebrüht. Nachdem die Teeblätter lange genug gezogen haben, wird der Kolben in den Filtereinsatz eingeschoben und in den flüssigkeitsundurchlässigen unteren Teil des Filtereinsatzes hinabgepresst. Dabei nimmt er die Teeblätter mit und trennt diese von der umgebenden Flüssigkeit, so dass ein weiteres Ziehen des Tees vermieden wird. Der Kolben ist mit einer Kolbenstange verbunden, die wiederum durch einen Deckel hindurchgeführt ist, mit dem das Gefäss nach oben hin überdeckt werden kann. Auch derartige Kolben-Teebereiter sind von der BODUM®-Gruppe in einer Vielzahl von Ausführungen erhältlich.

Der Filtereinsatz ist dabei in einigen Ausführungen wie in der Druckschrift WO 2007/082391 ausgebildet. Diese Druckschrift offenbart einen Filtereinsatz mit einem Grundkörper, in dessen oberem Bereich eine umlaufende Manschette aus einem flexiblen, elastischen Kunststoff angebracht ist. Die Manschette weist eine elastische wellenförmige Aussenkontur auf, die rosettenartig mit abwechselnden Erhöhungen und Vertiefungen entlang der Umfangsrichtung verläuft. Dadurch wird der Filtereinsatz wirksam in der oberen Öffnung des Gefässes gehalten und gegen Verkippen oder Herausfallen gesichert, selbst wenn der Innendurchmesser der oberen Öffnung des Gefässes erhebliche Toleranzen aufweist, wie dies insbesondere bei Glas- oder Keramikgefässen der Fall sein kann.

In anderen Ausführungen wird auch bei einem Kolben-Teebereiter der Filtereinsatz nicht direkt in den Teekrug, sondern in ein Deckelunterteil eingesetzt, das als Haltering ausgebildet ist und eine Einführöffnung für den Filtereinsatz bildet. Dies ist z.B. beim Produkt BISTRO NOUVEAU 1880 (BODUM®-Katalog 2009, Seite 47) der Fall.

Bei den oben genannten Teebereitem wird der fertige Tee entweder über einen schnabelartigen Ausgiessbereich des Teekrugs oder durch eine Tülle ausgegossen, die integral am Teekrug selbst ausgebildet ist. Der Ausgiessbereich oder die Tülle sind in der Regel nicht verschlossen. Dies hat den Nachteil, dass der im Teekrug befindliche Tee relativ schnell abkühlt. Ausserdem kann der im Teekrug befindliche Tee bei unsachgemässer Handhabung durch den offenen Ausgiessbereich oder die Tülle verschüttet werden oder herausspritzen und dabei Verbrühungen verursachen.

Ebenfalls sind aus dem Stand der Technik sogenannte Stempelfilter-Kaffeebereiter bekannt, die häufig auch als "French-Press"-Kaffeebereiter oder kurz als "Coffee Press" bezeichnet werden. Derartige Kaffeebereiter umfassen normalerweise ein zylindrisches Glasgefäss, in dem ein Filterkolben verschiebbar angeordnet ist. Der Filterkolben umfasst eine Kolbenstange, an deren unterem Ende ein Stempelfilter mit einem feinen Draht- oder Kunststoffnetz angebracht ist. Die Kolbenstange ist durch einen Deckel hindurchgeführt, der das Gefäss nach oben hin überdeckt.

Von der BODUM®-Gruppe sind insbesondere Kaffeebereiter unter den Produktbezeichnungen BEAN 10945 oder 10977 (BODUM®-Katalog 2009, Seiten 12-15) bekannt, deren Ausgiesser separat vom Gefäss an einem Deckelteil ausgebildet sind und über einen Hebelmechanismus verschlossen sind. Dadurch werden Wärmeverluste minimiert, und die Gefahr von Verbrühungen durch unsachgemässe Handhabung wird vermindert. Ein derartiger Kaffeebereiter ist der WO 2009/149568 A2 oder in der WO 2010/003258 A1 angegeben. Diese Dokumente gehören zum Stand der Technik nach Art. 54(3) EPÜ. Der entsprechende Hebelmechanismus ist jedoch nicht für Teebereiter der oben genannten Art geeignet.

US 7464637 B1 zeigt einen weiteren Getränkebereiter nach dem Stand der Technik.

### DARSTELLUNG DER ERFINDUNG

Es ist daher eine Aufgabe der vorliegenden Erfindung, einen Getränkebereiter mit Filtereinsatz anzugeben, bei dem Wärmeverluste verringert sind und bei dem die Gefahr des Verschüttens oder Verspritzens eines darin aufgenommenen Getränks verringert ist.

Diese Aufgabe wird durch einen Getränkebereiter mit den Merkmalen des Anspruchs 1 gelöst. Weitere Ausführungsformen sind in den abhängigen Ansprüchen angegeben.

Es wird also ein Getränkebereiter angegeben, der die folgenden Merkmale aufweist:
- ein nach oben offenes Gefäss;
- einen in das Gefäss einführbaren, nach oben offenen Filtereinsatz mit einer Vielzahl von Filteröffnungen; sowie
- einen das Gefäss zumindest teilweise überdeckenden Deckel, welcher ein Deckelunterteil mit einer unteren Deckwand umfasst, die das Gefäss teilweise überdeckt, wobei in der unteren Deckwand eine Einführöffnung ausgebildet ist, in welche der Filtereinsatz eingesetzt ist, so dass sich der Filtereinsatz durch die Einführöffnung hindurch in das Gefäss hinein erstreckt.

Um die genannte Aufgabe zu lösen, ist das Deckelunterteil dichtend am Gefäss gehalten. In der unteren Deckwand ist eine Ausgiessöffnung ausgebildet, um Flüssigkeit durch die Ausgiessöffnung hindurch aus dem Gefäss auszugiessen. Der Deckel umfasst einen Verschluss für die Ausgiessöffnung, wobei der Verschluss einen Hebel aufweist, der oberhalb der unteren Deckwand um eine horizontale Achse schwenkbar am Deckel angebracht ist und einen Betätigungsbereich aufweist, um den Hebel von einer ersten Stellung, in welcher der Verschluss die Ausgiessöffnung verschliesst, in eine zweite Stellung, in welcher der Verschluss die Ausgiessöffnung freigibt, zu verschwenken.

Auf diese Weise ist im Deckel ein Ventil ausgebildet, das sich gezielt öffnen und schliessen lässt. Die Gefahr, dass ein Getränk versehentlich aus dem Getränkebereiter verschüttet oder verspritzt wird, ist dadurch verringert. Zudem ist gewährleistet, dass nicht unnötig Wärme durch die Ausgiessöffnung hindurch verloren geht.

Bevorzugt handelt es sich beim Getränkebereiter um einen Kolben-Teebereiter ("Tea Press"). Der Getränkebereiter umfasst einen im Filtereinsatz entlang einer Verschiebungsrichtung verschiebbaren Kolben, der in einem zylindrischen Seitenwandbereich des Filtereinsatzes geführt ist, bevorzugt dichtend geführt ist.

Mit dem Kolben ist vorzugsweise eine Kolbenstange mit einem ersten und einem zweiten

Ende verbunden. Am ersten Ende der Kolbenstange ist der Kolben angeordnet, während am zweiten Ende ein Betätigungselement für den Kolben angebracht ist. Der Deckel umfasst dann vorzugsweise ausserdem ein Deckeloberteil, das von der Kolbenstange durchsetzt ist und eine obere Deckfläche aufweist, die das Deckelunterteil zumindest teilweise überdeckt, insbesondere im Bereich der Einführöffnung für den Filtereinsatz.

Das Deckeloberteil lässt sich vorzugsweise unmittelbar auf das Deckelunterteil auflegen, kann aber auch auf dem Filtereinsatz aufliegen. In einer bevorzugten Ausgestaltung ist das Deckeloberteil lösbar mit dem Deckelunterteil verbindbar, insbesondere verrastbar, um ein unbeabsichtigtes Verrutschen des Deckeloberteils und damit der Kolbenstange zu vermeiden.

In einer bevorzugten Ausgestaltung weist das Deckeloberteil eine sich von der oberen Deckfläche aus nach unten in den Filtereinsatz hinein erstreckende Schürze auf. Dadurch wird einerseits das Deckeloberteil zentriert und gegen Verkippen stabilisiert. Andererseits wird dadurch auch der Filtereinsatz in der Einsatzöffnung fixiert, und es wird verhindert, dass Flüssigkeit direkt aus dem Filtereinsatz unter Umgehung des Verschlusses nach aussen gelangt.

Die Abdichtung zwischen Deckelunterteil und Gefäss erfolgt vorzugsweise entlang des gesamten Randes des Gefässes umlaufend. Dies ist aber nicht zwingend. Die Abdichtung ist mindestens in einem solchen Bereich vorgesehen, dass zwischen dem Deckelunterteil und dem Gefäss im normalen Gebrauch im Wesentlichen keine Flüssigkeit austreten kann.

Vorzugsweise ist das Deckelunterteil in eine obere Öffnung des Gefässes eingesetzt und an der Gefässinnenseite gedichtet. In einer vorteilhaften Ausgestaltung umfasst dazu das Deckelunterteil eine sich vertikal nach unten erstreckende umlaufende Schürze, welche sich das Gefäss hinein erstreckt und an deren Aussenseite mindestens ein umlaufendes Dichtelement angeordnet ist, welches dichtend innen an einer Seitenwand des Gefässes anliegt.

Das Deckelunterteil kann lösbar am Gefäss befestigt sein, z.B. über eine Bajonettverbindung oder über eine Rastverbindung.

Um ein gezieltes Ausgiessen des Getränks zu ermöglichen, ist vorzugsweise entweder am Deckelunterteil oder am Gefäss oberhalb der unteren Deckwand ein Ausgiesser ausgebildet. Ein solcher Ausgiesser kann z.B. schnabelartig, teilrohrförmig oder rohrförmig nach Art einer Ausgiesstülle ausgebildet sein. Dabei befindet sich die durch den Verschluss verschliessbare Ausgiessöffnung zwischen dem Gefässinnenraum und dem Ausgiesser.

Die Ausgiessöffnung ist dann bezüglich der horizontalen (lateralen) Ebene bevorzugt zwischen der Einführöffnung und dem Ausgiesser angeordnet, so dass die Ausgiessöffnung beim Kippen des Getränkebereiters zum Ausgiessen unterhalb der Einführöffnung zu liegen kommt. Auf diese Weise wird verhindert, dass Flüssigkeit zwischen der Einführöffnung und dem Filtereinsatz austritt, falls an dieser Stelle keine oder eine ungenügende Dichtung ausgebildet ist.

Der Betätigungsbereich des Hebels ist dann bevorzugt auf einer der Ausgiessöffnung und dem Ausgiesser abgewandten Seite der Einführöffnung angeordnet, d.h. er befindet sich im rückwärtigen Bereich des Getränkebereiters, so dass er z.B. mit dem Daumen eines Benutzers betätigt werden kann. Der Hebel erstreckt sich dann an mindestens einer Seite, bevorzugt aber beidseitig lateral seitlich um die Einführöffnung herum, um das Einsetzen des Filtereinsatzes nicht zu behindern.

Insbesondere kann der Hebel einen ringartigen Bereich aufweisen, der eine Durchgangsöffnung bildet, durch welche hindurch sich der Filtereinsatz erstreckt, d.h. die lateralen Abmessungen (im Falle einer kreisförmigen Öffnung der Durchmesser) der Durchgangsöffnung sind mindestens genau so gross wie die lateralen Abmessungen der Einsatzöffnung, bevorzugt grösser als diese und insbesondere grösser als die lateralen Abmessungen des Filtereinsatzes.

Eine besonders einfache und sichere Lagerung des Hebels ergibt sich, wenn am ringartigen Bereich an zwei gegenüberliegenden Seiten Lagerelemente zur schwenkbaren Lagerung des Hebels am Deckelunterteil vorhanden sind. Solche Lagerelemente können einstückig mit dem Hebel ausgebildet sein und im einfachsten Fall durch jeweils einen Lagerzapfen auf jeder Seite gebildet sein. Dementsprechend sind dann komplementäre Lagerelemente am Deckelunterteil ausgebildet, bevorzugt im Bereich von dessen äusserem Rand. Insbesondere kann es sich dabei um zwei einander gegenüberliegende, maulförmige Lagerelemente zur Aufnahme der Lagerzapfen handeln, wobei die Lagerzapfen unter Überwindung einer elastischen Federkraft in die Lagerelemente einklickbar sind.

Das Gefäss wird häufig einen Handgriff aufweisen. In diesem Fall ist es bevorzugt, wenn der Betätigungsbereich des Hebels benachbart zum Handgriff angeordnet ist und insbesondere oberhalb des Handgriffs über die Aussenwand des Gefässes hinausragt. Dadurch wird eine Einhandbedienung möglich, indem der Benutzer den Hebel mit dem Daumen derselben Hand betätigt, mit der er auch das Gefäss hält. Insbesondere kann das Deckelunterteil eine sich von der unteren Deckwand nach oben erstreckende Seitenwand aufweisen, in der in einem dem Ausgiesser abgewandten Bereich eine Durchgangsöffnung ausgebildet ist, und wobei sich der Betätigungsbereich des Hebels durch die Durchgangsöffnung hindurch erstreckt.

Vorzugsweise ist der Hebel in Richtung seiner ersten Stellung federbelastet, um sicherzustellen, dass die Ausgiessöffnung verschlossen ist, solange der Hebel nicht bewusst betätigt wird. Stattdessen kann der Hebel aber auch so ausgebildet sein, dass die Ausgiessöffnung allein aufgrund der Gewichtskraft des Hebels und des Verschlusskörpers verschlossen ist, solange kein Druck auf den Betätigungsbereich ausgeübt wird.

Bevorzugt ist zur Erzeugung der Federkraft eine Druckfeder vorhanden. Diese ist vorzugsweise in einem dem Ausgiesser abgewandten, hinteren Bereich des Deckels zwischen dem Hebel und der darunter gelegenen unteren Deckwand angeordnet, um den Hebel in Richtung seiner ersten Stellung mit einer Federkraft zu beaufschlagen. Eine solche Feder kann aber auch in einem dem Ausgiesser benachbarten Bereich des Hebels zwischen dem Hebel und einem oberhalb des Hebels angeordneten Deckelbereich angeordnet sein.

Sofern die Druckfeder im hinteren Deckelbereich angeordnet ist, ist vorzugsweise in der Deckwand eine topfförmige, sich zum Gefässinneren hin erstreckende Vertiefung (Federaufnahme) ausgebildet, in welche hinein sich die Druckfeder erstreckt. Auf diese Weise ist die Druckfeder gegen seitliche Verschiebungen oder gar Herausfallen gesichert, und es wird eine genügend grosse Federlänge für den benötigten Federweg ermöglicht.

Der Hebel kann selbst die Ausgiessöffnung verschliessen. Hierzu ist am Hebel einstückig oder getrennt ein Verschlusskörper ausgebildet, um in der ersten Stellung die Ausgiessöffnung zu verschliessen. Der Verschlusskörper kann insbesondere aus einem weicheren Material als der restliche Hebel gebildet sein, um eine verbesserte Dichtwirkung zu erzielen. Der Hebel kann aber auch z.B. indirekt auf einen separat am Deckel gehaltenen zweiten Hebel mit einem daran angebrachten Verschlusskörper wirken.

Der Filtereinsatz ist vorzugsweise elastisch in der Einführöffnung gehalten. Besonders bevorzugt ist er dichtend in der Einführöffnung gehalten. In einer bevorzugten Ausgestaltung ist der Filtereinsatz wie in der schon erwähnten WO 2007/082391 ausgebildet, d.h. er weist einen hohlen Filterkörper und eine mit diesem verbundene, umlaufende Manschette aus einem flexiblen, elastischen Material auf, wobei die Manschette eine elastische, rosettenartig mit abwechselnden Erhöhungen und Vertiefungen entlang der Umfangsrichtung verlaufende Aussenkontur aufweist, um den Filtereinsatz in der Einführöffnung zu halten.

Das Gefäss kann einwandig oder z.B. auch doppelwandig ausgestaltet sein.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Explosionsdarstellung eines erfindungsgemässen Getränkebereiters;
- Fig. 2: eine Explosionsdarstellung in Seitenansicht;
- Fig. 3: eine perspektivische Ansicht eines Deckelunterteils mit daran gelagertem Verschluss;
- Fig. 4: einen zentralen Längsschnitt durch den Getränkebereiter der Fig. 1;
- Fig. 5: eine perspektivische Ansicht des Getränkebereiters der Fig. 1.

### BESCHREIBUNG BEVORZUGTER AUSFÜHRUNGSFORMEN

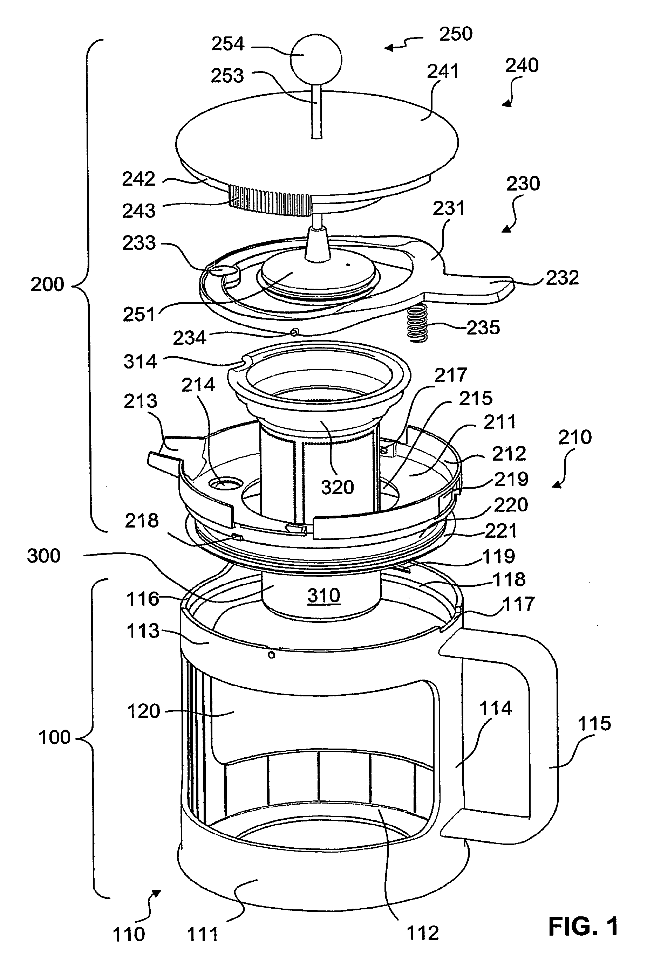

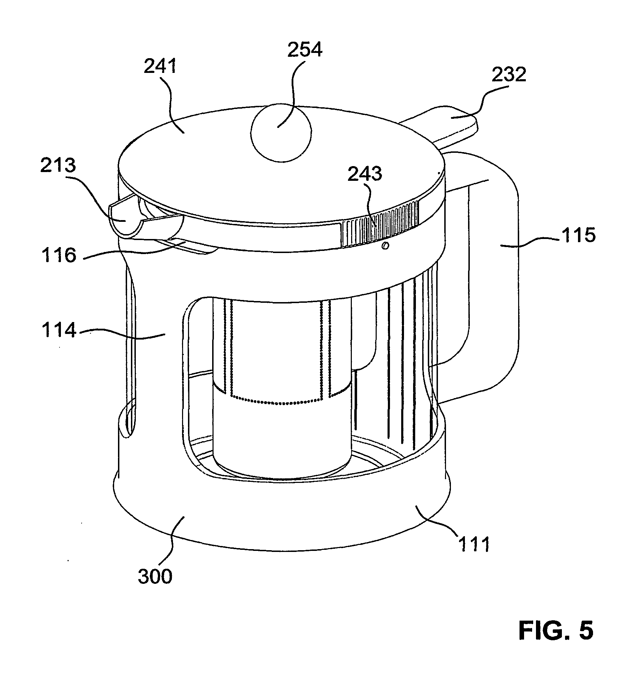

In den Figuren 1 bis 5 ist eine bevorzugte Ausführungsform eines erfindungsgemässen Getränkebereiters in Form eines Kolben-Teebereiters ("Tea Press") in verschiedenen Ansichten dargestellt. Der Getränkebereiter umfasst ein Gefäss 100, einen Deckel 200 und einen Filtereinsatz 300.

Das Gefäss 100 kann auch als Teekrug bezeichnet werden. Dieses Gefäss umfasst einen nach oben offenen, zylindrischen Glasbehälter 120, der in einem Halter 110 aus Kunststoff gehalten ist. Der Halter 110 weist einen unteren umlaufenden Ring 111 auf, der einen unteren Seitenwandbereich des zylindrischen Glasbehälters 120 umgibt, sowie einen umlaufenden oberen Ring 113, der einen oberen Randbereich des Glasbehälters 120 umgibt. Diese beiden Ringe sind durch vertikale Stege 114 miteinander verbunden. Im rückwärtigen Bereich des Halters 110 ist ein Handgriff 115 ausgebildet, welcher ebenfalls den oberen Ring 113 mit dem unteren Ring 111 verbindet. Vom unteren Ring 111 aus erstreckt sich ein umlaufender Bodenflansch 112 nach innen, auf welchem der Boden des Glasbehälters 120 aufliegt. Der obere Ring 113 steht über den oberen Rand 118 des Glasbehälters um einen gewissen Betrag über. Im oberen Randbereich des oberen Rings 113 ist oberhalb des Handgriffs 115 eine hintere Ausnehmung 117 ausgebildet, und diametral gegenüberliegend zu dieser hinteren Ausnehmung 117 ist eine vordere Ausnehmung 116 ausgebildet, die tiefer und breiter als die hintere Ausnehmung 117 ist. An der Innenseite des überstehenden Bereichs des oberen Rings 113 sind seitlich an zwei gegenüberliegenden Seiten zwei Führungsnuten 119 für eine später noch näher beschriebene Bajonettverbindung zum Deckel 200 ausgebildet.

Der Deckel 200 umfasst ein Deckelunterteil 210, einen Verschlusshebel 230, ein oberes Deckelteil 240 und einen Stempel 250.

Das Deckelunterteil 210 umfasst eine im Wesentlichen ebene untere Deckwand 211, die das Gefäss 100 nach oben hin teilweise überdeckt. Die untere Deckwand 211 weist zwei Öffnungen auf, nämlich eine Ausgiessöffnung 214 und eine relativ dazu erheblich grössere Einführöffnung 215 für den Filtereinsatz 300. Hiervon abgesehen, überdeckt die untere Deckwand 211 die obere Öffnung des Gefässes 100 vollständig.

Von der unteren Deckwand 211 erstreckt sich eine zylindrische Schürze 220 nach unten in das Gefäss hinein. Von der zylindrischen Schürze 220 aus ragt eine umlaufende, flexible Dichtlippe 221 nach aussen, welche zusammen mit der zylindrischen Seitenwand des Glasbehälters 120 eine Abdichtung zwischen dem Gefäss 100 und dem Deckelunterteil 210 bildet.

Lateral gesehen weiter aussen als die Schürze 220 erstreckt sich eine Seitenwand 212 von der unteren Deckwand 211 aus nach oben. Die Seitenwand weitet sich nach oben hin über eine Stufe etwas auf. Sie ist oberhalb der Stufe seitlich durch zwei gegenüberliegende Ausnehmungen 216 unterbrochen, um Griffbereiche 243 des oberen Deckelteils 240 aufzunehmen. Dies wird nachfolgend noch näher beschrieben. Oberhalb des Handgriffs 115 ist in der Seitenwand 212 eine Durchgangsöffnung 219 ausgebildet, um einen Betätigungsbereich 232 des Verschlusshebels 230 nach aussen zu führen. Auch dies wird nachfolgend noch näher beschrieben. Auf der diametral gegenüberliegenden Seite von dieser Durchgangsöffnung 219 ist ein Ausgiesser 213 ausgebildet, welcher hier die Form eines in etwa mittig aufgeschnittenen Rohres aufweist. Dabei kommt es aber auf die genaue Form des Ausgiessers nicht an, und der Ausgiesser könnte z.B. auch schnabelförmig ausgebildet sein oder eine rohrartige Tülle bilden.

Unterhalb der Ausnehmungen 216, aber oberhalb der Deckwand 211 und benachbart zur Seitenwand 212 und innerhalb von dieser sind an zwei gegenüberliegenden Seiten des unteren Deckelteils 210 zwei Lagerelemente 217 für den Verschlusshebel 230 ausgebildet, die maulförmig ausgebildet sind, so dass Lagerzapfen 234 des Verschlusshebels 230 unter Überwindung einer elastischen Federkraft in diese Lagerelemente einklickbar sind. Ebenfalls unterhalb der Ausnehmungen 216 sind an der Aussenseite der Seitenwand 212 zwei Bajonettzapfen 218 ausgebildet, die in die Führungsnuten 119 am oberen Ring 113 des Gefässhalters 110 einführbar sind, um das Deckelunterteil 210 über eine Bajonettverbindung lösbar mit dem Gefäss 100 zu verriegeln. Auf diese Weise ist das Deckelunterteil 210 sicher gegen ein Herausfallen aus dem Gefäss 100 geschützt.

Der Verschlusshebel 230 weist einen ringförmigen Bereich 231 auf Dieser weist eine zentrale Öffnung auf, die einen grösseren Durchmesser als die Einführöffnung 215 des Deckelunterteils besitzt. Dadurch kann der Filtereinsatz 300 durch die Öffnung hindurch in die Einführöffnung eingeschoben werden. Am rückwärtigen Ende dieses ringförmigen Bereichs 231 ist ein Betätigungsbereich 232 in Form eines langgestreckten Flansches ausgebildet. Am gegenüberliegenden vorderen Ende des ringförmigen Bereichs 231 befindet sich ein Verschlusskörper 233, der aus einem weicheren Material als der ringförmige Bereich 231 gebildet ist. An zwei aneinander gegenüberliegenden Seiten, in Umfangsrichtung um ca. 90° vom Betätigungsbereich 232 und vom Verschlusskörper 233 entfernt, befinden sich die schon erwähnten Lagerzapfen 234, mit denen der Verschlusshebel in die Lagerelemente 217 einklickbar ist, so dass er um eine die Lagerzapfen verbindende horizontale Achse verschwenkbar ist.

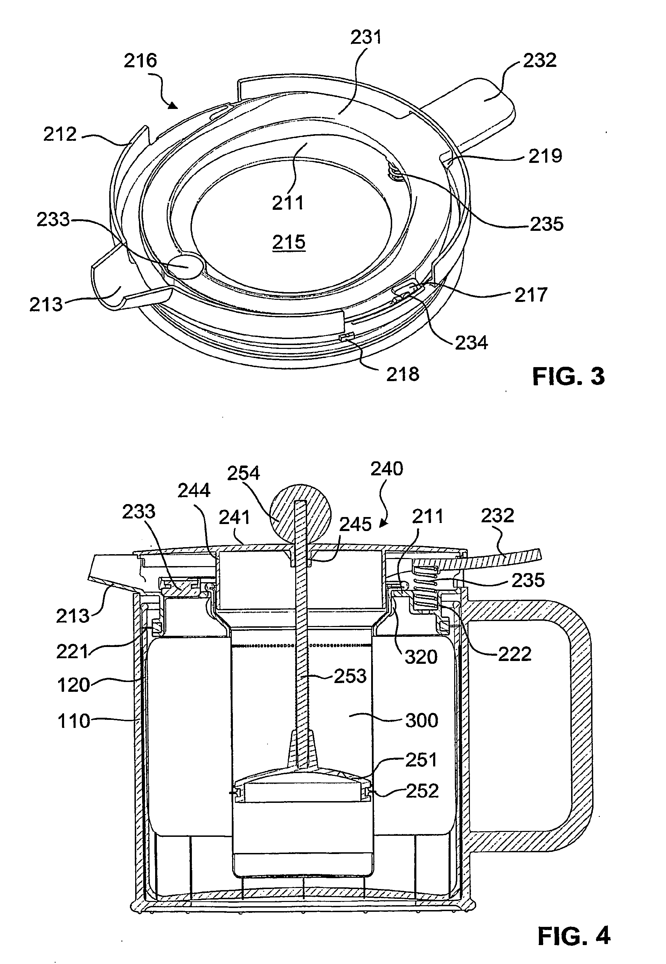

Eine Feder 235 ist in eine Federaufnahme 222 (Fig. 4) einsetzbar und belastet im zusammengesetzten Zustand den Verschlusshebel 230 mit seinem rückwärtigen Ende nach oben, so dass der Verschlusskörper 233 auf die Ausgiessöffnung 214 gepresst wird und diese verschliesst. Durch Druck auf den Betätigungsbereich 232 kann der Verschlusskörper 233 von der Ausgiessöffnung 214 abgehoben werden, um die Ausgiessöffnung 214 freizugeben. Zu diesem Zweck ist der Betätigungsbereich 232 durch die schon erwähnte Durchgangsöffnung 219 in der Seitenwand 212 des Deckelunterteils 210 hindurchgeführt und kommt im zusammengesetzten Zustand oberhalb des Handgriffs 115 des Gefässes zu liegen, wobei der Betätigungsbereich 232 nach hinten hin über die Seitenwand des Gefässes 100 hinaus vorsteht. Das Zusammenwirken des Verschlusshebels 230 mit dem Deckelunterteil 210 ist insbesondere auch aus der Fig. 3 gut erkennbar.

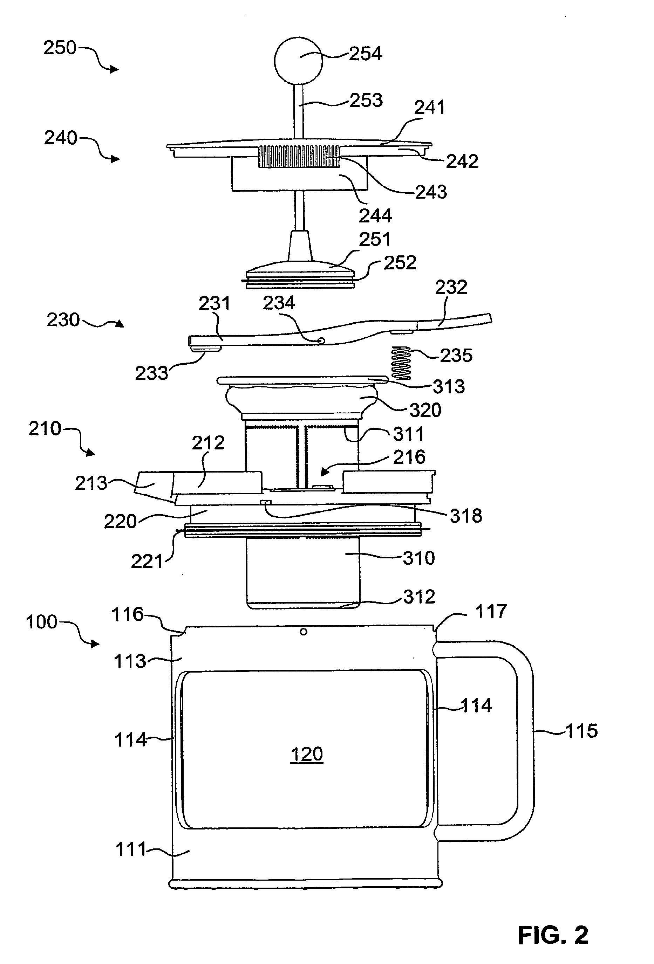

Der Filtereinsatz 300 umfasst einen im Wesentlichen hohlzylindrischen Filterkörper 310 mit einem geschlossenen Boden 312 (Fig. 2) und einer umlaufenden, zylindrischen Seitenwand. In einem oberen Seitenwandbereich sind mehrere Felder von Filteröffnungen 311 (Fig. 2) ausgebildet, die in den Abbildungen nur stark schematisch angedeutet sind. In Realität befinden sich solche Filteröffnungen in den gesamten rechteckigen Flächenbereichen, die in den Figuren 1, 2 und 5 erkennbar sind. In einem unteren Bereich der Seitenwand ist der Filterkörper 310 dagegen flüssigkeitsundurchlässig ausgebildet.

Im Bereich seines oberen Endes weitet sich der Filterkörper 310 zunächst auf und weist am oberen Rand einen sich lateral nach aussen erstreckenden, umlaufenden Auflageflansch 313 auf, mit welchem der Filtereinsatz im zusammengesetzten Zustand auf dem die Einsatzöffnung 215 umgebenden Bereich der unteren Deckwand 211 aufliegt. Eine Ausnehmung 314 (Fig. 1) unterbricht den Flansch 313 im Bereich der Ausgiessöffnung 214.

Im Bereich seines oberen Endes ist der Filterkörper 310 zudem mit einer elastischen, umlaufenden Manschette 320 ummantelt. Die Manschette weist eine elastische, wellenförmige Aussenkontur auf, die rosettenartig mit abwechselnden Erhöhungen und Vertiefungen entlang der Umfangsrichtung verläuft. Dadurch wird der Filtereinsatz wirksam in der Einsatzöffnung 215 gehalten, und es wird zudem eine gewisse Dichtwirkung zwischen dem Deckelunterteil 210 und dem Filtereinsatz 300 erzielt. Für die nähere Ausgestaltung eines Filtereinsatzes mit einer derartigen Manschette wird auf die schon erwähnte WO 2007/082391 verwiesen.

Das Deckeloberteil 240 weist eine obere Deckwand 241 auf, die das Deckelunterteil 210 mit Ausnahme des Ausgiessers 213 vollständig überdeckt. Eine kurze umlaufende Ringwand 242 erstreckt sich von der Deckwand 241 nach unten und kommt im zusammengesetzten Zustand innerhalb der Seitenwand 212 des Deckelunterteils 210 zu liegen (Fig. 4). An zwei sich seitlich gegenüberliegenden Bereichen erstrecken sich Griffbereiche 243 von der Deckwand 241 aus weiter als die Ringwand 242 nach unten. Diese Griffbereiche 243 werden im zusammengesetztem Zustand in den Ausnehmungen 216 der Seitenwand 212 des Deckelunterteils 210 aufgenommen und bewirken dort eine lösbare Rastverbindung zwischen dem Deckelunterteil 210 und dem Deckeloberteil 240.

In der oberen Deckwand 241 ist eine verhältnismässig kleine zentrale Durchgangsöffnung für die Kolbenstange 253 des Stempels 250 vorhanden. Im Bereich dieser Durchgangsöffnung erstreckt sich eine Führungshülse 245 nach unten, um die Kolbenstange 253 zu führen. Eine umlaufende zylindrische Schürze 244 erstreckt sich derart von der oberen Deckwand 241 nach unten, dass sie im zusammengesetzten Zustand in den oberen Randbereich des Filtereinsatzes 300 hineinragt, um diesen zusätzlich im Deckerunterteil 210 zu fixieren und um zu verhindern, dass Flüssigkeit vom Filtereinsatz 300 unter Umgehung der Ausgiessöffnung 214 zum Ausgiesser 213 gelangt (Fig. 4).

Der Stempel 250 umfasst einen Kolbenkörper 251, an dessen lateral äusserem Rand eine umlaufende Dichtlippe 252 (Fig. 2) ausgebildet ist. Der Durchmesser des Kolbenkörpers 251 ist derart gewählt, dass die Dichtlippe dichtend im zylindrischen Seitenwandbereich des Filterkörpers 310 verschiebbar ist (Fig. 4). Die schon erwähnte Kolbenstange 253 durchsetzt die entsprechende Öffnung im Deckeloberteil 240 und verbindet den Kolbenkörper 251 mit einem Betätigungsknopf 254. Auf diese Weise kann der Stempel 250 selbst dann von aussen betätigt werden, wenn das Deckeloberteil 240 auf dem Deckelunterteil 210 aufliegt.

Zur Zubereitung von Tee oder von anderen Infusionsgetränken wird das Deckelunterteil 210 über die vorstehend schon beschriebene Bajonettverbindung mit dem Gefäss 100 verbunden. Anschliessend wird der Filtereinsatz 300 durch die den ringförmigen Bereich 231 des Verschlusshebels 230 hindurch in die Einführöffnung 215 und damit in das Gefäss 100 eingeführt und mit Hilfe der Manschette 320 am Deckelunterteil 210 fixiert. Nun werden Teeblätter oder anderes zu extrahierendes Material, z.B. getrocknete Fruchtstückchen usw., in den Filtereinsatz 300 gegeben und mit heissem Wasser aufgebrüht. Anschliessend wird das Deckeloberteil 240 auf das Deckelunterteil 210 aufgelegt und mit Hilfe der Griffbereiche 243 am Deckelunterteil 210 fixiert. Dabei befindet sich der Stempel 250 in einer oberen Stellung, so dass durch die Filteröffnungen 311 ein Flüssigkeitsaustausch zwischen dem Inneren und dem Äusseren des Filtereinsatzes 300 stattfinden kann, während Feststoffe im Filtereinsatz 300 zurückgehalten werden. Nachdem das Getränk genügend lange extrahiert wurde (also genügend "gezogen" hat), wird der Stempel 250 mit Hilfe des Betätigungsknopf 254 hinabgedrückt, so dass der flüssigkeitsundurchlässige Bereich des Filtereinsatzes 300 zusammen mit dem Kolbenkörper 251 eine abgeschlossenen Kammer bildet, in der die Feststoffe im wesentlichen von der umgebenden Flüssigkeit getrennt sind. Hierdurch wird eine weitere Extraktion weitgehend gestoppt.

Wenn das Getränk nun ausgegossen werden soll, ergreift der Benutzer das Gefäss 100 am Handgriff 115 und drückt mit dem Daumen auf den Betätigungsbereich 232 des Verschlusshebels 230. Hierdurch wird der Verschlusskörper 233 von der Ausgiessöffnung 214 abgehoben, und der Benutzer kann nun das Getränk durch die Ausgiessöffnung 214 hindurch über den Ausgiesser 213 ausgiessen.

Zur Reinigung lässt sich der Getränkebereiter leicht zerlegen, indem das Deckeloberteil 240 vom Deckelunterteil 210 getrennt wird und zusammen mit dem Stempel 250 entfernt wird. Nun kann der Filtereinsatz 300 aus dem Deckelunterteil 210 herausgenommen werden. Hierbei schützt die Manschette 320 den Benutzer vor möglichen Verbrennungen, falls der Filterkörper 310 noch heiss sein sollte. Ausserdem kann die Bajonettverbindung zwischen dem Gefäss 100 und dem Deckelunterteil 210 gelöst werden, und das Deckelunterteil 210 kann zusammen mit dem Verschlusshebel 230 vom Gefäss 100 entfernt werden.

Während die Erfindung vorstehend anhand eines bevorzugten Ausführungsbeispiels beschrieben wurde, ist die Erfindung keineswegs auf dieses Ausführungsbeispiel begrenzt, und es sind eine grosse Zahl von Änderungen möglich, ohne den Bereich der Erfindung zu verlassen. So braucht der Getränkebereiter nicht notwendigerweise als Kolben-Teebereiter ausgebildet zu sein. Der Verschlusshebel kann auch anders als in der hier dargestellten Art ausgebildet sein und braucht sich insbesondere nicht auf beiden Seiten ringförmig umlaufend um die Einführöffnung 215 herum zu erstrecken, sondern kann an einer Seite auch unterbrochen sein. Ausserdem ist es nicht zwingend, dass der Hebel 230 selbst auch eine Verschliessfunktion wahrnimmt, sondern es ist auch denkbar, dass ein separater, zweiter Hebel vorgesehen ist, der den Verschlusskörper 233 trägt und der über den Hebel 230 zwischen einer verschliessenden und einer freigebenden Stellung verschwenkbar ist. Der Filtereinsatz 300 kann auf verschiedenste Weise ausgestaltet sein, z.B. kann er vollständig aus Kunststoff bestehen, er kann aber auch z.B. mindestens teilweise aus Edelstahl gefertigt sein. In gewissen Ausführungsformen ist es auch denkbar, Filteröffnungen auch in anderen Bereichen des Filtereinsatzes vorzusehen und/oder statt eines geschlossenen Kolbenkörpers z.B. einen feinmaschigen Filterkolben vorzusehen, wie er aus "French Press"-Kaffeebereitern bekannt ist, auch wenn dadurch eine weitere Extraktion des Getränks nicht in ebenso wirksamen Mass durch Hinunterdrücken des Stempels beendet werden kann wie bei der oben dargestellten bevorzugten Ausführungsform. Auch der Gefässhalter kann anders als in den Zeichnungen ausgebildet sein oder kann ganz entfallen, z.B. wenn das Gefäss einen einstückig angeformten Handgriff aufweist. Das Gefäss kann auch vollständig aus Kunststoff oder aus Glas, aber z.B. auch ganz oder teilweise aus Keramik gefertigt sein. Entsprechend kann auch die Verbindung zwischen dem Gefäss und dem Deckelunterteil anders als in der hier dargestellten Weise gelöst sein. Eine grosse Zahl von weiteren Abwandlungen ist selbstverständlich möglich.

### BEZUGSZEICHENLISTE

| | | | |
|---|---|---|---|
| 100 | Gefäss | 221 | Dichtlippe |
| 110 | Halter | 230 | Verschlusshebel |
| 111 | unterer Ring | 231 | ringförmiger Bereich |
| 112 | innerer Ringflansch | 232 | Betätigungsbereich |
| 113 | oberer Ring | 233 | Verschlusskörper |
| 114 | Steg | 234 | Lagerzapfen |
| 115 | Handgriff | 235 | Feder |
| 116 | vordere Ausnehmung | 240 | Deckeloberteil |
| 117 | hintere Ausnehmung | 241 | obere Deckwand |
| 118 | oberer Rand | 242 | Ringwand |
| 119 | Führungsnut | 243 | Haltebereich |
| 120 | Glasbehälter | 244 | Schürze |
| 200 | Deckel | 250 | Stempel |
| 210 | Deckelunterteil | 251 | Kolbenkörper |
| 211 | untere Deckwand | 252 | Dichtlippe |
| 212 | Seitenwand | 253 | Kolbenstange |
| 213 | Ausgiesser | 254 | Betätigungsknopf |
| 214 | Ausgiessöffnung | 300 | Filtereinsatz |
| 215 | Einführöffnung | 310 | Filterkörper |
| 216 | Ausnehmung | 311 | Filteröffnung |
| 217 | Lagerelement | 312 | Boden |
| 218 | Bajonettzapfen | 313 | Auflageflansch |
| 219 | Durchgangsöffnung | 320 | Manschette |
| 220 | Schürze | | |

## Patentansprüche

1. Getränkebereiter, aufweisend:
- ein nach oben offenes Gefäss (100);
- einen in das Gefäss (100) einführbaren Filtereinsatz (300), der einen zylindrischen Seitenwandbereich aufweist;
- einen im zylindrischen Seitenwandbereich des Filtereinsatzes (300) entlang einer Verschiebungsrichtung verschiebbaren Kolben (251); sowie
- einen das Gefäss (100) zumindest teilweise überdeckenden Deckel (200), welcher ein Deckelunterteil (210) mit einer unteren Deckwand (211) umfasst, die das Gefäss (100) teilweise überdeckt, wobei in der unteren Deckwand (211) eine Einführöffnung (215) ausgebildet ist, in welche der Filtereinsatz (300) eingesetzt ist, so dass sich der Filtereinsatz (300) durch die Einführöffnung (215) hindurch in das Gefäss (100) hinein erstreckt,
**dadurch gekennzeichnet, dass**
- das Deckelunterteil (210) dichtend am Gefäss (100) gehalten ist;
- dass in der unteren Deckwand (211) eine Ausgiessöffnung (214) ausgebildet ist, um Flüssigkeit durch die Ausgiessöffnung (214) hindurch aus dem Gefäss (100) auszugiessen,
- und dass der Deckel einen Verschluss für die Ausgiessöffnung (214) umfasst, wobei der Verschluss einen Hebel (230) aufweist, der oberhalb der unteren Deckwand (211) um eine horizontale Achse schwenkbar am Deckel (200) angebracht ist und einen Betätigungsbereich (232) aufweist, um den Hebel (230) von einer ersten Stellung, in welcher der Verschluss die Ausgiessöffnung (214) verschliesst, in eine zweite Stellung, in welcher der Verschluss die Ausgiessöffnung (214) freigibt, zu verschwenken.

2. Getränkebereiter nach Anspruch 1, welcher aufweist:
- eine mit dem Kolben (251) verbundene Kolbenstange (253) mit einem ersten und einem zweiten Ende, wobei am ersten Ende der Kolben (251) angeordnet ist und wobei am zweiten Ende ein Betätigungselement (254) für den Kolben angebracht ist; sowie
- ein Deckeloberteil (240), das von der Kolbenstange (253) durchsetzt ist und eine obere Deckfläche (241) aufweist, die das Deckelunterteil (210) zumindest teilweise überdeckt.

3. Getränkebereiter nach Anspruch 2, wobei das Deckeloberteil (240) auf dem Deckelunterteil (210) aufliegt.

4. Getränkebereiter nach Anspruch 2 oder 3, wobei das Deckeloberteil (240) lösbar mit dem Deckelunterteil (210) verbindbar ist.

5. Getränkebereiter nach einem der Ansprüche 2-4, wobei das Deckeloberteil (240) eine sich von der oberen Deckfläche (241) aus nach unten in den Filtereinsatz (300) hinein erstreckende Schürze (244) aufweist.

6. Getränkebereiter nach einem der vorhergehenden Ansprüche, wobei das Deckelunterteil (210) eine sich vertikal nach unten erstreckende umlaufende Schürze (220) aufweist, welche sich das Gefäss (100) hinein erstreckt und an deren Aussenseite mindestens ein umlaufendes Dichtelement (221) angeordnet ist, welches dichtend innen an einer Seitenwand des Gefässes (100) anliegt.

7. Getränkebereiter nach einem der vorhergehenden Ansprüche, wobei am Deckelunterteil (210) oder am Gefäss (100) oberhalb der Deckwand (211) ein Ausgiesser (213) ausgebildet ist, und wobei die Ausgiessöffnung (214) bezüglich einer lateralen Ebene zwischen der Einführöffnung (215) und dem Ausgiesser (213) angeordnet ist.

8. Getränkebereiter nach Anspruch 7, wobei der Betätigungsbereich (232) des Hebels (230) auf einer der Ausgiessöffnung (214) abgewandten Seite der Einführöffnung (215) angeordnet ist und sich der Hebel (230) an mindestens einer Seite seitlich um die Einführöffnung (215) herum erstreckt.

9. Getränkebereiter nach einem der vorhergehenden Ansprüche, wobei der Hebel (230) einen ringartigen Bereich (231) aufweist, der eine Durchgangsöffnung bildet, durch welche hindurch sich der Filtereinsatz (300) erstreckt.

10. Getränkebereiter nach Anspruch 9, wobei am ringartigen Bereich (231) an zwei gegenüberliegenden Seiten Lagerelemente (234) zur schwenkbaren Lagerung des Hebels am Deckelunterteil (210) vorhanden sind.

11. Getränkebereiter nach einem der vorhergehenden Ansprüche, wobei das Gefäss (100) einen Handgriff (115) aufweist und wobei der Betätigungsbereich (232) des Hebels (230) benachbart zum Handgriff (115) angeordnet ist.

12. Getränkebereiter nach einem der vorhergehenden Ansprüche, wobei der Hebel (230) in Richtung seiner ersten Stellung federbelastet ist.

13. Getränkebereiter nach einem der vorhergehenden Ansprüche, wobei am Hebel (230) ein Verschlusskörper (233) ausgebildet ist, um in der ersten Stellung die Ausgiessöffnung (214) zu verschliessen.

14. Getränkebereiter nach einem der vorhergehenden Ansprüche, wobei der Filtereinsatz (300) einen hohlen Filterkörper (310) und eine mit diesem verbundene, umlaufende Manschette (320) aus einem flexiblen, elastischen Material umfasst, und wobei die Manschette (320) eine elastische, rosettenartig mit abwechselnden Erhöhungen und Vertiefungen entlang der Umfangsrichtung verlaufende Aussenkontur aufweist, um den Filtereinsatz (300) in der Einführöffnung (215) zu halten.

## Claims

1. A beverage maker comprising:
- a vessel (100), which is open in an upward direction;
- a filter insert (300) adapted to be introduced into the vessel (100) and has a cylindrical side-wall region;
- a plunger (251), which is displaceable along a displacement direction in the cylindrical sidewall region of the filter insert (300); and
- a lid (200), which at least partially covers over the vessel (100) and comprises a lower lid part (210) with a lower covering wall (211), which partially covers over the vessel (100), an introduction opening (215) being formed in the lower covering wall (211), into which the filter insert (300) is inserted, such that the filter insert (300) extends through the introduction opening (215) into the vessel (100),
**characterized in that**
- the lower lid part (210) is retained with sealing action on the vessel (100);
- a pouring opening (214) is formed in the lower covering wall (211), in order for liquid to be poured out of the vessel (100) through the pouring opening (214),
- and the lid comprises a closure for the pouring opening (214), the closure comprising a lever (230) which is fitted on the lid (200), above the lower covering wall (211), the lever being pivotable about a horizontal axis and having an actuating region (232), in order for the lever (230) to be pivoted from a first position, in which the closure closes the pouring opening (214), into a second position, in which the closure frees the pouring opening (214).

2. The beverage maker as claimed in claim 1, comprising:
- a plunger rod (253), which is connected to the plunger (251) and has a first and a second end, wherein the plunger (251) is arranged at the first end, and wherein an actuating element (254) for the plunger is fitted at the second end; and
- an upper lid part (240), which has the plunger rod (253) passing through it and has an upper covering surface (241), which at least partially covers over the lower lid part (210).

3. The beverage maker as claimed in claim 2, wherein the upper lid part (240) rests on the lower lid part (210).

4. The beverage maker as claimed in claim 2 or 3, wherein the upper lid part (240) is connectable in a releasable manner to the lower lid part (210).

5. The beverage maker as claimed in one of claims 2-4, wherein the upper lid part (240) has a skirt (244), which extends downward into the filter insert (300) from the upper covering surface (241).

6. The beverage maker as claimed in one of the preceding claims, wherein the lower lid part (210) has a vertically downwardly extending encircling skirt (220), which extends into the vessel (100) and on the outside of which is arranged at least one encircling sealing element (221), which butts with sealing action against the inside of a side wall of the vessel (100).

7. The beverage maker as claimed in one of the preceding claims, wherein a spout (213) is formed on the lower lid part (210) or on the vessel (100), above the covering wall (211), and wherein the pouring opening (214) is arranged between the introduction opening (215) and the spout (213), as seen in respect of a lateral plane.

8. The beverage maker as claimed in claim 7, wherein the actuating region (232) of the lever (230) is arranged on a side of the introduction opening (215) which is directed away from the pouring opening (214), and the lever (230) extends laterally, on at least one side, around the introduction opening (215).

9. The beverage maker as claimed in one of the preceding claims, wherein the lever (230) has a ring-like region (231), which forms a through-passage opening, through which the filter insert (300) extends.

10. The beverage maker as claimed in claim 9, wherein bearing elements (234) for mounting the lever in a pivotable manner on the lower lid part (210) are present on two opposite sides of the ring-like region (231).

11. The beverage maker as claimed in one of the preceding claims, wherein the vessel (100) has a handle (115), and wherein the actuating region (232) of the lever (230) is adjacent to the handle (115).

12. The beverage maker as claimed in one of the preceding claims, wherein the lever (230) is spring-loaded in the direction of its first position.

13. The beverage maker as claimed in one of the preceding claims, wherein a closure body (233) is formed on the lever (230), in order for the pouring opening (214) to be closed in the first position.

14. The beverage maker as claimed in one of the preceding claims, wherein the filter insert (300) comprises a hollow filter body (310) and an encircling collar (320), which is connected thereto and is made of a flexible, elastic material, and wherein the collar (320) has an elastic outer contour which runs in the manner of a rosette, with alternating crests and troughs, along the circumferential direction, in order for the filter insert (300) to be retained in the introduction opening (215).

## Revendications

1. Appareil de préparation de boissons, présentant :
- un récipient ouvert vers le haut (100) ;
- un élément filtrant (300) pouvant être introduit dans le récipient (100), lequel présente une région de paroi latérale cylindrique ;
- un piston (251) pouvant coulisser dans la région de paroi latérale cylindrique de l'élément filtrant (300) le long d'une direction de coulissement ; et
- un couvercle (200) recouvrant au moins en partie le récipient (100), lequel comprend une partie inférieure de couvercle (210) avec une paroi de couvercle inférieure (211), laquelle recouvre partiellement le récipient (100), une ouverture d'introduction (215) étant réalisée dans la paroi de couvercle inférieure (211), dans laquelle ouverture d'introduction l'élément filtrant (300) est inséré, de telle sorte que l'élément filtrant (300) s'étende à travers l'ouverture d'introduction (215) à l'intérieur du récipient (100),
**caractérisé en ce que**
- la partie inférieure de couvercle (210) est maintenue de manière hermétique contre le récipient (100) ;
- dans la paroi de couvercle inférieure (211) est réalisée une ouverture de déversement (214), afin de déverser du liquide à travers l'ouverture de déversement (214) hors du récipient (100),
- et le couvercle présente une fermeture pour l'ouverture de déversement (214), la fermeture présentant un levier (230) qui est monté au-dessus de la paroi de couvercle inférieure (211) sur le couvercle (200) de manière à pouvoir pivoter autour d'un axe horizontal et présente une région d'actionnement (232) afin de faire pivoter le levier (230) d'une première position dans laquelle la fermeture ferme l'ouverture de déversement (214) dans une deuxième position dans laquelle la fermeture libère l'ouverture de déversement (214).

2. Appareil de préparation de boissons selon la revendication 1, lequel présente :
- une tige de piston (253) connectée au piston (251), avec une première et une deuxième extrémité, le piston (251) étant disposé à la première extrémité et un élément d'actionnement (254) pour le piston étant monté à la deuxième extrémité ; et
- une partie supérieure de couvercle (240), qui est traversée par la tige de piston (253) et qui présente une surface de couvercle supérieure (241) qui recouvre au moins en partie la partie inférieure de couvercle (210).

3. Appareil de préparation de boissons selon la revendication 2, dans lequel la partie supérieure de couvercle (240) repose sur la partie inférieure de couvercle (210).

4. Appareil de préparation de boissons selon la revendication 2 ou 3, dans lequel la partie supérieure de couvercle (240) peut être connectée de manière amovible à la partie inférieure de couvercle (210).

5. Appareil de préparation de boissons selon l'une quelconque des revendications 2 à 4, dans lequel la partie supérieure de couvercle (240) présente une jupe (244) s'étendant depuis la surface de couvercle supérieure (241) vers le bas jusqu'à l'intérieur de l'élément filtrant (300).

6. Appareil de préparation de boissons selon l'une quelconque des revendications précédentes, dans lequel la partie inférieure de couvercle (210) présente une jupe (220) périphérique s'étendant verticalement vers le bas, laquelle s'étend à l'intérieur du récipient (100) et au moins un élément d'étanchéité périphérique (221) est disposé sur son côté extérieur, lequel élément d'étanchéité s'applique hermétiquement à l'intérieur contre une paroi latérale du récipient (100).

7. Appareil de préparation de boissons selon l'une quelconque des revendications précédentes, dans lequel un bec verseur (213) est réalisé au niveau de la partie inférieure de boîtier (210) ou au niveau du récipient (100) au-dessus de la paroi de couvercle (211), et dans lequel l'ouverture de déversement (214) est disposée par rapport à un plan latéral entre l'ouverture d'introduction (215) et le bec verseur (213).

8. Appareil de préparation de boissons selon la revendication 7, dans lequel la région d'actionnement (232) du levier (230) est disposée d'un côté de l'ouverture d'introduction (215) opposé à l'ouverture de déversement (214) et le levier (230) s'étend latéralement tout autour de l'ouverture d'introduction (215) sur au moins un côté.

9. Appareil de préparation de boissons selon l'une quelconque des revendications précédentes, dans lequel le levier (230) présente une région annulaire (231), laquelle forme une ouverture de passage à travers laquelle s'étend l'élément filtrant (300).

10. Appareil de préparation de boissons selon la revendication 9, dans lequel des éléments de palier (234) pour le support pivotant du levier sur la partie inférieure de couvercle (210) sont prévus au niveau de la région annulaire (231) sur deux côtés opposés.

11. Appareil de préparation de boissons selon l'une quelconque des revendications précédentes, dans lequel le récipient (100) présente une poignée (115) et dans lequel la région d'actionnement (232) du levier (230) est disposée à proximité de la poignée (115).

12. Appareil de préparation de boissons selon l'une quelconque des revendications précédentes, dans lequel le levier (230) est sollicité par ressort dans la direction de sa première position.

13. Appareil de préparation de boissons selon l'une quelconque des revendications précédentes, dans lequel un corps de fermeture (233) est réalisé sur le levier (230), afin de fermer l'ouverture de déversement (214) dans la première position.

14. Appareil de préparation de boissons selon l'une quelconque des revendications précédentes, dans lequel l'élément filtrant (300) comprend un corps de filtre creux (310) et une manchette (320) circonférentielle, connectée à celui-ci, en un matériau flexible élastique, et dans lequel la manchette (320) présente un contour extérieur élastique, en forme de rosette, avec des rehaussements et des renfoncements alternés, s'étendant le long de la direction périphérique, afin de maintenir l'élément filtrant (300) dans l'ouverture d'introduction (215).
